Europäisches Patentamt

European Patent Office

Office européen des brevets

(11) Veröffentlichungsnummer: **0 014 905**
**A1**

(12) # EUROPÄISCHE PATENTANMELDUNG

(21) Anmeldenummer: **80100625.5**

(51) Int. Cl.³: **F 16 J 15/32**

(22) Anmeldetag: **07.02.80**

(30) Priorität: **15.02.79 DE 2905724**

(43) Veröffentlichungstag der Anmeldung:
**03.09.80 Patentblatt 80/18**

(84) Benannte Vertragsstaaten:
**AT CH FR GB IT SE**

(71) Anmelder: **PRÄDIFA Präzisions-Dichtungs-Fabrik
GmbH
Arnold-Jäger-Strasse 1
D-7120 Bietigheim-Bissingen(DE)**

(72) Erfinder: **Bucher, Hans
Buchenweg 3
D-7101 Obergruppenbach(DE)**

(72) Erfinder: **Geduldig, Roland
Burgstrasse 2
D-7120 Bietigheim-Bissingen(DE)**

(74) Vertreter: **Bartels, Hans et al,
Bartels, Brandes, Held, Wolff Patentanwälte Lange
Strasse 51
D-7000 Stuttgart 1(DE)**

(54) **Stangen-Dichtung.**

(57) Ein vom Dichtteil (10) mit Dichtlippe (18) und reibschlußerzeugender Haftlippe (20) gesondertes, kombiniertes Abstreif-/Halteteil (12) besitzt einen radialen Vorsprung (32) für den Eingriff in eine Aussparung (9) der die ganze Dichtung (10,12) aufnehmenden Erweiterung (5) einer Zylinderkopf (4)-Bohrung (3), so daß der zunächst nur haftende Dichtteil (10) mittels des Abstreif-/Halteteiles (12) formschlüssig festgelegt ist, welcher separat verwendbar ist.

EP 0 014 905 A1

./...

Fig.1.

PRÄDIFA
Präzisions-Dichtungs-Fabrik GmbH
Bietigheim-Bissingen (Baden-Württemberg)

Stangen-Dichtung

02.01.80
125 847/83 09afp

Die Erfindung betrifft eine Dichtung zum Abdichten des Ringspaltes zwischen einer Kolbenstange und einem Zylinderkopf mit einer Bohrung für den Durchtritt der Kolbenstange und einer radialen Erweiterung der Bohrung an der Außenseite des Zylinderkopfes zur Aufnahme der Dichtung, die einen am Grund der Erweiterung anzuordnenden Dichtteil mit einer sich an die Kolbenstange anschmiegenden Dichtlippe und mit einem Haftteil aufweist und deren Dichtteil ein Abstreif-/Halteteil mit einer die Kolbenstange umschließenden Abstreiflippe und mit einem axial vor dem Dichtteil anzuordnenden Halteteil zum formschlüssigen Verbinden der Dichtung mit der Erweiterung zugeordnet ist, wobei der Abstreif-/Halteteil einstückig als erste bauliche Einheit und getrennt davon der Dichtteil als zweite bauliche Einheit ausgebildet ist.

Eine aus der DE-GS 7 247 034 bekannte Dichtung ähnlicher Art ohne die zuletzt genannte Ausbildung weist einen inhomogenen Dicht- mit Abstreifteil einschließlich einer radial verstärkenden Metalleinlage und einen separaten Halteteil aus Metall in Form eines Drahtringes oder einer Sicherungsscheibe auf, welcher den Dicht- mit Abstreifteil axial fixiert und dazu in eine Ringnut der Erweiterung der Zylinderkopf-Bohrung eingreift. Nachteilig ist daran speziell, daß das üblicherweise nicht aus Edelmetall bestehende Halteteil allmählich rostet oder auf andere Weise korrodiert.

Eine aus der DE-AS 2 610 584 bekannte Dichtung gleicher Art wie das Gebrauchsmuster ist ein inhomogenes Dicht-, Abstreif- und Halteteil mit einer radial verstärkenden Metall- oder Kunststoffeinlage, die den Halteteil bildet, der im Dicht- mit Abstreifteil verankert ist und eine die Abstreiflippe umgebende sogenannte Stützkante aufweist, die ebenfalls in eine Ringnut der Erweiterung der Zylinderkopf-Bohrung eingreift und mittels einer Sollbruchstelle am Halteteil zum Zwecke der Demontage der Dichtung abtrennbar ist. Nachteilig ist daran speziell, daß nicht nur der Halteteil, falls er aus Metall besteht, rosten kann, sondern auch der Halteteil nach dem Ausbau der Dichtung zum Auswechseln des einstückigen Dicht- mit Abstreifteiles nicht wieder verwendbar ist.

Beiden bekannten Dichtungen ist der Nachteil gemeinsam, daß das Material der Dicht- und der Abstreiflippe ein und dasselbe und damit den verschiedenen Lippenfunktionen nicht besonders angepaßt ist und daß ihre Herstellung infolge der Verwendung unterschiedlicher miteinander zu verbindender Materialien verhältnismäßig teuer ist.

Dieser Nachteil ist durch eine aus der DE-GS 7 814 685 bekannte Dichtung gleicher Art wie das Gebrauchsmuster 7 247 034 teilweise beseitigt, welche den Dicht-, den Abstreif- und den Halteteil in einem Stück vereinigt, dessen Material im Dicht- und Abstreifteil weicher, im Halteteil dagegen härter ist. Die Herstellung dieser Dichtung ist aber schwierig und es bleibt dabei, daß die Dichtlippe und die Abstreiflippe aus demselben Material bestehen.

In diesem Zusammenhang ist zu beachten, daß die Abstreiflippe aufgrund ihrer stärkeren Beanspruchung schneller verschleißt als die Dichtlippe, so daß es wünschenswert erscheint, die Abstreiflippe unter Belassung der Dichtlippe vor dieser durch eine neue zu ersetzen.

Zu beachten ist außerdem, daß die Form der Dichtlippe bei pneumatischen und hydraulischen Zylindern verschieden zu sein hat, nämlich eine abgerundete bzw. scharfe Kante aufweisen soll. Ferner ist zu beachten, daß einfachwirkende Zylinder keine Dichtung im engeren Sinne benötigen, sondern nur deren Abstreifteil, da ihr Kolben auf der Stangenseite nicht vom Fluid beaufschlagt wird. Unter diesem Gesichtspunkt und dem des Bedarfs an verschiedenen Dichtlippenformen je nach der Natur des Druckmediums (Gas oder Flüssigkeit als Fluid) ist die Lagerhaltung der bekannten Dichtungen sehr aufwendig. Daran würde sich durch die einstückige, heterogene Dichtung nichts ändern.

Es ist zwar aus der DE-OS 2 235 472 auch schon eine Stangen-Dichtung der eingangs genannten Art, insbesondere für hydraulische Stoßdämpfer, bekannt, welche also zwei getrennte Einheiten mit verschiedenen mechanischen Eigenschaften zum Öl- bzw. Schmutzabstreifen aufweist, welche mittels einer radial wirksamen formschlüssigen Verbindung dichtend miteinander verbunden sind. Dabei sind das homogene Abstreif-/Halteteil und das durch ein ringförmiges Metall-Winkelstück verstärkte, dadurch inhomogene Dichtteil gemeinsam in einen die Schmutz-Abstreiflippe freilegenden Spannring gefaßt, der von einem konzentrischen Schraubring im Dämpfer-Rohr unter Abdichtung gegen eine Kolbenstangen-Führungsbuchse in diesem Rohr gepreßt ist. Die Dichtlippe (=Öl-Abstreiflippe) ist zudem mit einer radial wirksamen Ringfeder innerhalb des Spannringes versehen. Diese Ausgestaltung einer Dichtung der eingangs genannten Art ist jedoch nachteilig, weil ihre Herstellung aufwendig und damit teuer ist und das Winkelstück rosten kann, wobei hinzukommt, daß die bekannte Dichtung teilweise oder ganz nur de- und remontierbar ist, wenn der Spannring nach Herausdrehen des Schraubringes entfernt ist.

Der Erfindung liegt nun die Aufgabe zugrunde, eine Dichtung der eingangs genannten Art ohne die oben bezeichneten Nachteile und Mängel zu schaffen, welche verhältnismäßig einfach und billig herstellbar, korrosionsfrei, in allen ihren Teilen nach dem Ausbau wiederverwendbar und ohne weiteres aus verschiedenen Materialien für den Dicht- und den Abstreifteil erzeugbar ist. Daneben soll diese Dichtung ohne Entfernen der

- 4 -

Kolbenstange, beispielsweise zu Reparaturzwecken, ein- und ausbaubar sein.

Diese Aufgabe ist erfindungsgemäß dadurch gelöst, daß der Abstreif-/Halteteil mit mindestens einem radialen, mit dem Halteteil einstückigen Vorsprung für den Eingriff in eine zugeordnete Aussparung der Erweiterung der Zylinderkopf-Bohrung versehen ist und daß der Dichtteil eine Haftlippe aufweist, die so ausgebildet ist, daß sie durch Eigenelastizität unter Vorspannung in der Erweiterung anliegt. Offenbar ist die Lagerhaltung von Dichtungen nach der Erfindung relativ umfangsarm, weil der Abstreif-/Halteteil für einfachwirkende Zylinder allein benutzt und für doppeltwirkende Zylinder beliebig mit einem passenden Dichtteil kombiniert werden kann. Die Kombinierbarkeit des Abstreif-/Halteteiles und des separaten Dichtteiles ermöglicht es auch, bei Reparaturen nur den Abstreif-/Halteteil zu erneuern und den dauerhafteren Dichtteil weiterzubenutzen. Bei der Herstellung der erfindungsgemäßen Dichtung kann wunschgemäß für den Dichtteil weicheres Material, beispielsweise ein Gummiwerkstoff, und für den Abstreif-/Halteteil härteres Material, beispielsweise ein Elastometer- oder Plastometer-Werkstoff, verwendet werden. Dabei ist die Herstellung ohne Schwierigkeiten kostengünstig möglich. Korrosionsbehaftete Teile weist die erfindungsgemäße Dichtung nicht auf. Ihre Teile können ausgebaut und wieder eingebaut werden, ohne dabei ihre Funktionsfähigkeit einzubüßen oder einen Stangenausbau zu erfordern.

Es sind zwar schon seit langem Dicht/Abstreifkombinationen bekannt, die aus einem Dichtteil (Lippen- oder Nutring) und aus einem Abstreifteil bestehen, welche axial voneinander getrennt in zwei verschiedenen Erweiterungen der Zylinderkopf-Bohrung angeordnet sind. Der Dichtteil erfordert hier jedoch einen eigenen Haltebund, so daß zwei Einbauräume nötig sind, von denen der eine auch noch schwer zugänglich ist. In diesem Zusammenhang ist darauf hinzuweisen, daß die erfindungsgemäße
einen
Dichtung wie an sich bekannt/dem Dichtteil angehörenden Haftteil, nämlich die Haftlippe, aufweist, der nicht mit dem Halteteil zu verwechseln ist und den Zweck erfüllt, den Dichtteil durch Haftreibung, d.h. durch kraftschlüssige Verbindung
mit der Erweiterung der Zylinderkopf-Bohrung, radial festzulegen und die statische Außenabdichtung der Bohrungserweiterung zu bewirken.
Darüber hinaus hat der genannte Haftteil bei der Dichtung nach
der Erfindung aber noch die Aufgabe, den Dichtteil vorübergehend axial festzulegen, bis der Abstreif-/Halteteil diese
Aufgabe für den Dichtteil endgültig übernommen hat.

Bei einer bevorzugten Ausführungsform der erfindungsgemäßen
Dichtung weist der Abstreif-/Halteteil einen dem Dichtteil abgewandten, axial vorspringenden Füllring auf, der die Abstreiflippe umgibt. Dieser Füllring hat den besonderen Vorteil, daß
er den bei den beiden bekannten, eingangs abgehandelten Dichtungen vorhandenen Hohlraum, der radial zwischen der Abstreiflippe und der Bohrungswandung gelegen ist, nahezu ausfüllt
und dadurch verhindert, daß sich abgestreifter Schmutz oder
überschüssiges Öl in diesem Zwischenraum festsetzen, der bei
den bekannten Dichtungen frei bleiben muß, weil sonst der
Halteteil nicht zugänglich ist. Diese Zugänglichkeit kann bei
der Dichtung nach der Erfindung einfach dadurch gewährleistet
sein, daß die Bohrungswandung an einer Stelle ihres Innenumfanges mit einer Ausnehmung versehen ist, die das Herauslösen des
Abstreif-/Halteteiles mittels eines einfachen Werkzeuges erlaubt. Auch bei der bekannten Stangen-Dichtung für Stoßdämpfer
besteht zwischen der Schmutz-Abstreiflippe und einem Innenflansch am Schraubring ein Hohlraum, der abgestreiften Schmutz
aufnimmt.
Bei der bevorzugten Ausführungsform ist als radialer Vorsprung
des Abstreif-/Halteteiles ein Haltering vorgesehen, der eine
dem Dichtteil abgewandte, axial beaufschlagbare Stützfläche
aufweist, die an einer ihr gegenüberliegenden Gegenfläche
eines umlaufenden Einstiches in der Erweiterung der Zylinderkopf-Bohrung anliegen kann. Dieser Haltering ist aus dem
Material ausgeformt, aus dem der ganze Abstreif-/Halteteil
besteht und bildet mit diesem ein Stück.

Bei der bevorzugten Ausführungsform weisen der Abstreif-/Hal= teteil und der Dichtteil wie bei der bekannten Dichtung für Stoßdämpfer eine radial wirksame formschlüssige Verbindung auf, die durch zwei komplementäre profilierte Ringflächen gebildet ist. Diese Verbindung sorgt für eine ordungsgemäße Lagerung der liegenden Dichtung, weil ihre Teile nicht aneinander verschoben werden können. Sie ist bei der bevorzugten Ausführungsform so ausgestaltet, daß die Ringfläche am Abstreif-/Halteteil eine Teilfläche mit einer Normalen aufweist, die mit der Normalen der Stützfläche am erwähnten Haltering ungefähr übereinstimmt. Dadurch wird vorteilhafterweise erreicht, daß der Druck des Mediums, mit dem der die Dichtung aufweisende Zylinder betrieben wird, eine Kraftkomponente wirksam werden lassen kann, die den Haltering am Abstreif-/Halteteil in den umlaufenden Einstich der Erweiterung der Zylinderkopf-Bohrung preßt, so daß er sicher radial zentriert und axial fixiert ist.

- 7 -

Im folgenden ist die Erfindung anhand der durch die Zeichnung beispielhaft dargestellten beiden Varianten der bevorzugten Ausführungsform im einzelnen erläutert.

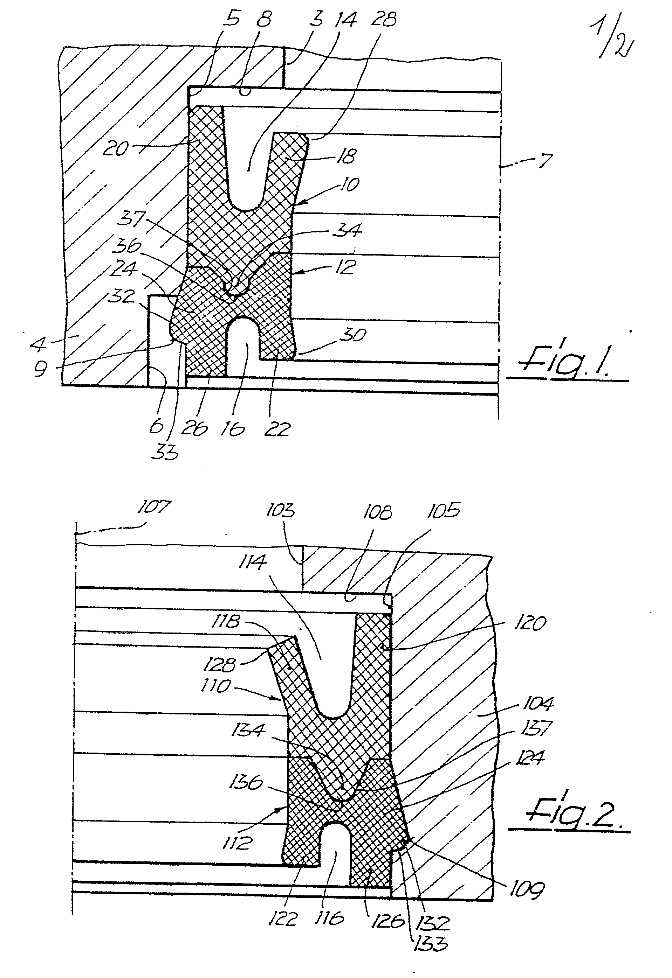

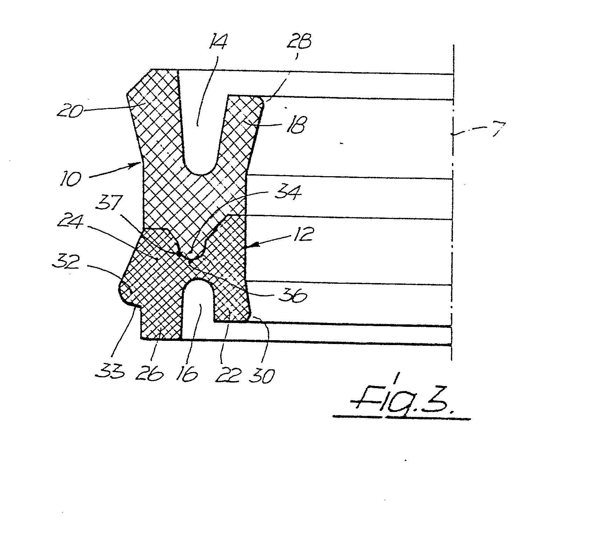

Die Fig. 1 und 2 zeigen die erste bzw. zweite Variante der Ausführungsform in Verbindung mit der Erweiterung einer Zylinderkopf-Bohrung, je geschnitten in einer die Bohrungsachse enthaltenden Längsebene, so daß das Profil der Dichtungsteile sichtbar ist. Fig. 3 zeigt die erste Variante in entspanntem Zustand außerhalb der Erweiterung.

Die Bohrung 3 im Zylinderkopf 4 besitzt an ihrem dargestellten Ende eine kreiszylindrische radiale Erweiterung 5 mit einem nur in Fig. 1 gezeigten Schlitz 6, der in einer die Bohrungsachse 7 enthaltenden Längsebene liegt und sowohl radial nach innen als auch vorn an der Stirnseite des Zylinderkopfes 4 offen und damit zugänglich ist.

Die erste Variante nach Fig. 1 und 3 ist eine sich selbst sichernde zweiteilige Dichtung, die aus einem hinteren Dichtteil 10 und aus einem vorderen Abstreif-/Halteteil 12 besteht, die je kreisringförmig ausgebildet sind. Beide je homogene Teile 10 und 12 sind im Profil ungefähr U-förmig, wobei die gestaltgebenden Ringräume 14 und 16 radial von einer inneren Dichtlippe 18 und von einer äußeren Haftlippe 20 bzw. einerseits innen von einer Abstreiflippe 22 und andererseits außen von einer Haltelippe 24 und einem Füllring 26, die den Halteteil bilden, begrenzt sowie axial nach hinten bzw. vorn offen sind.

Die Dichtlippe 18 weist eine abgerundete Dichtkante 28 auf. Ähnlich ist die Abstreiflippe 22 mit einer abgerundeten Abstreifkante 30 versehen. Die Haftlippe 20 berührt nahezu den ringförmigen Grund 8 der Erweiterung 5 und ist in Fig. 3 radial entlastet dargestellt, liegt aber radial von innen an der Erweiterung 5 elastisch an. Die Haltelippe 24, an die der Füllring 26 einstückig angeformt ist, ist mit einem radial vorspringenden Haltering 32 mit Stützfläche 33 versehen,

0014905

der in einem umlaufenden Einstich 9 eingepaßt ist. Das gerundete Profil des Halteringes 32 und das ihm entsprechende Profil des Einstiches 9 sind so gewählt, daß eine radial äußere, längere Flanke und eine axial vordere, kürzere Flanke dem Haltering 32 und damit der Haltelippe 24 nach der Seite bzw. nach vorn Halt geben.

Der Dichtteil 10 und der Abstreif-/Halteteil 12 der Dichtung sind dadurch formschlüssig miteinander verbunden, daß der Teil 10 mit einem axial vorspringenden Ring 34 in eine vertiefte Ringfläche 36 des Teiles 12 eingreift, und zwar so, daß beide eine radial äußere, schräge, gemeinsame Berührungsfläche bilden, über die das in dem hinteren Ringraum 14 befindliche Druckmedium eine Kraft auf den Haltering 32 ausüben kann, welche auf den Einstich 9 ausgerichtet ist und sowohl eine axiale als auch eine radiale Komponente besitzt. Die Ringfläche 36 weist also eine Teilfläche 37 mit einer Normalen auf, die mit der Normalen der Stützfläche 33 am Haltering 32 im wesentlichen übereinstimmt.

Die zweite Variante nach Fig. 2 ist eine Dichtung, deren den Teilen der ersten Variante gleichende oder entsprechende Teile mit um 100 höheren Bezugszahlen bezeichnet sind.

Hier ist die Dichtkante 128 scharf und die Querschnittsfläche des Ringes 134 und der Ringfläche 136 vergrößert sowie glatter begrenzt, da die Dichtung gemäß Fig. 2 nicht für einen Pneumatik-, sondern für einen Hydraulikzylinder bestimmt ist, der mit Öl höheren Drucks betrieben wird.

Patentansprüche

1. Dichtung zum Abdichten des Ringspaltes zwischen einer Kolbenstange und einem Zylinderkopf mit einer Bohrung für den Durchtritt der Kolbenstange und einer radialen Erweiterung der Bohrung an der Außenseite des Zylinderkopfes zur Aufnahme der Dichtung, die einen am Grund der Erweiterung anzuordnenden Dichtteil mit einer sich an die Kolbenstange anschmiegenden Dichtlippe und mit einem Haftteil aufweist und deren Dichtteil ein Abstreif-/Halteteil mit einer die Kolbenstange umschließenden Abstreiflippe und mit einem axial vor dem Dichtteil anzuordnenden Halteteil zum formschlüssigen Verbinden der Dichtung mit der Erweiterung zugeordnet ist, wobei der Abstreif-/Halteteil einstückig als erste bauliche Einheit und getrennt davon der Dichtteil als zweite bauliche Einheit ausgebildet ist, dadurch gekennzeichnet, daß der Abstreif-/Halteteil (12; 112) mit mindestens einem radialen, mit dem Halteteil (24; 124) einstückigen Vorsprung (32; 132) für den Eingriff in eine zugeordnete Aussparung (9; 109) der Erweiterung (5; 105) versehen ist und daß der Dichtteil (10; 110) eine Haftlippe (20; 120) aufweist, die so ausgebildet ist, daß sie durch Eigenelastizität unter Vorspannung in der Erweiterung anliegt.

2. Dichtung nach Anspruch 1, dadurch gekennzeichnet, daß der Abstreif-/Halteteil (12; 112) einen dem Dichtteil (10; 110) abgewandten, axial vorspringenden Füllring (26; 126) aufweist, der die Abstreiflippe (22; 122) umgibt.

3. Dichtung nach Anspruch 1 oder 2, dadurch gekennzeichnet, daß als radialer Vorsprung des Abstreif-/Halteteiles (12; 112) ein Haltering (32; 132) vorgesehen ist, der eine dem Dichtteil (10; 110) abgewandte, axial beaufschlagbare Stützfläche (33; 133) aufweist.

4. Dichtung nach einem der Ansprüche 1 bis 3, wobei der Abstreif-/Halteteil und der Dichtteil eine radial wirksame formschlüssige Verbindung aufweisen, die durch zwei komplementäre profilierte Ringflächen gebildet ist, dadurch gekennzeichnet, daß die Ringfläche (36; 136) am Abstreif-/Halteteil (12; 112) eine Teilfläche (37; 137) mit einer Normalen aufweist, die mit der Normalen der Stützfläche (33; 133) am Haltering (32; 132) ungefähr übereinstimmt.

281179

5. Abstreifer zum Abstreifen einer Kolbenstange, die durch die Bohrung eines Zylinderkopfes tritt, die eine radiale Erweiterung an dessen Außenseite besitzt; welcher ein Abstreif-/ Halteteil mit einer die Kolbenstange umschließenden Abstreiflippe und mit einem Halteteil aufweist, wobei der Abstreif-/ Halteteil einstückig als bauliche Einheit ausgebildet ist, dadurch gekennzeichnet, daß der Abstreif-/Halteteil (12; 112) mit mindestens einem radialen, mit dem Halteteil (24; 124) einstückigen Vorsprung (32; 132) für den Eingriff in eine zugeordnete Aussparung (9; 109) der Erweiterung (5; 105) versehen ist.

6. Abstreifer nach Anspruch 5, dadurch gekennzeichnet, daß der Abstreif-/Halteteil (12; 112) einen axial vorspringenden Füllring (26; 126) aufweist, der die Abstreiflippe (22; 122) umgibt.

7. Abstreifer nach Anspruch 5 oder 6, dadurch gekennzeichnet, daß als radialer Vorsprung des Abstreif-/Halteteiles (12; 112) ein Haltering (32; 132) vorgesehen ist, der eine axial beaufschlagbare Stützfläche (33; 133) aufweist.

- . -

280180

Fig.1.

Fig.2.

0014905

1/2

Fa. PRÄDIFA ....

Reg.-Nr. 125 847

Fig.3.

Fa. PRÄDIFA · · · · ·

Reg.-Nr. 125 847

Europäisches Patentamt

**EUROPÄISCHER RECHERCHENBERICHT**

| | EINSCHLÄGIGE DOKUMENTE | | |
|---|---|---|---|
| Kategorie | Kennzeichnung des Dokuments mit Angabe, soweit erforderlich, der maßgeblichen Teile | betrifft Anspruch | |
| | DE – A – 2 229 682 (ASBEST- UND GUMMI-WERKE M. MERKEL KG) <br> * Anspruch 1; Fig. 1 bis 4 * <br> —— | 1 | |
| | DE – A1 – 2 616 796 (KNORR-BREMSE GMBH) <br> * Anspruch 1; Fig. * <br> —— | 1,5 | |
| D | DE – A – 2 235 472 (DEUTSCHE ITT IN-DUSTRIES GMBH) <br> * Anspruch 1; Fig. 1 bis 3 * <br> —— | 1 | |
| A,D | DE – B2 – 2 610 584 (C. FREUDENBERG) <br> * gesamtes Dokument * <br> —— | | |
| A,D | DE – U – 7 247 034 (KUPFER-ASBEST-CO. G. BACH) <br> * gesamtes Dokument * <br> —— | | |
| A,D | DE – U1 – 7 814 685 (PRÄDIFA JÄGER KG PRÄZISIONS-DICHTUNGS-FABRIK) <br> * gesamtes Dokument * <br> —— | | |
| P,X | DE – U1 – 7 904 146 (PRÄDIFA JÄGER KG PRÄZISIONS-DICHTUNGS-FABRIK) <br> * Ansprüche 1 bis 5 * <br> ———— | 1-7 | |

**KLASSIFIKATION DER ANMELDUNG (Int.Cl.³)**

F 16 J 15/32

**RECHERCHIERTE SACHGEBIETE (Int. Cl.³)**

F 16 J 15/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort <br> Berlin | Abschlußdatum der Recherche <br> 28-04-1980 | Prüfer <br> MASSALSKI |
|---|---|---|

EPA form 1503.1 06.78